**Europäisches Patentamt**

**European Patent Office**

**Office européen des brevets**

(19)

(11) Veröffentlichungsnummer: **0 179 998**
**B1**

(12) # EUROPÄISCHE PATENTSCHRIFT

(45) Veröffentlichungstag der Patentschrift:
**17.11.88**

(51) Int. Cl.⁴: **H 04 B 3/23**

(21) Anmeldenummer: **85110760.7**

(22) Anmeldetag: **27.08.85**

(54) Schaltungsanordnung zum Abgleichen eines Echokompensators.

(30) Priorität: **28.09.84 DE 3435775**

(43) Veröffentlichungstag der Anmeldung:
**07.05.86 Patentblatt 86/19**

(45) Bekanntmachung des Hinweises auf die Patenterteilung:
**17.11.88 Patentblatt 88/46**

(84) Benannte Vertragsstaaten:
**AT BE CH DE FR GB IT LI NL SE**

(56) Entgegenhaltungen:
**DE - A - 3 208 214**
**US - A - 4 012 603**

**FREQUENZ, Band 37, Juni 1983, Verlag Schiele & Schön, Berlin, REINHARD TILL "Adaptive Sprecherecho-Kompensation in Modems für die Duplex-Datenübertragung im Fernsprechnetz", pp. 145-154**

(73) Patentinhaber: **Siemens Aktiengesellschaft Berlin und München, Wittelsbacherplatz 2, D-8000 München 2 (DE)**

(72) Erfinder: **Haass, Adolf, Eichelhäherstrasse 54, D-8000 München 60 (DE)**

## Beschreibung

Die Erfindung bezieht sich auf eine Schaltungsanordnung zum Abgleichen eines Echokompensators, der ausgangsseitig mit einer Empfangsleitung eines diese und eine Sendeleitung umfassenden Vierdrahtleitungsabschnitts verbunden ist, welcher über eine Gabelschaltung mit einem Zweidrahtleitungsabschnitt verbunden ist, mit einer Einstellanordnung, welche eingangsseitig mit der Sendeleitung und der Empfangsleitung verbunden ist und welche aus den ihr eingangsseitig zugeführten Signalen jeweils ein Einstellsignal zur Einstellung des Echokompensators bildet, und mit einem in der Empfangsleitung liegenden, in seiner Verstärkung einstellbaren Verstärker.

Es ist bereits eine Einrichtung mit einem adaptiven Echokompensator bekannt (DE-OS 32 08 214), dessen Regelschaltung die Stärke der Korrelation zwischen dem Empfangssignal und dem Sendesignal berücksichtigt. Damit bei der betreffenden bekannten Einrichtung die Regelung beschleunigt verläuft, werden die Filterkoeffizienten bei starker Korrelation in Zeitabständen nachgestellt, die von der Entwicklung der Korrelationssummen abhängig sind. Bei schwacher Korrelation erfolgt die Nachstellung in festen, relativ grossen Zeitabständen, um eine genaue Adaption zu ermöglichen. Die korrelationsabhängige Koeffizientennachstellung erfolgt mittels einer Überwachungs- und Steuerschaltung, welche die Berechnung der Korrelationssummen überwacht und welche eine Koeffizientennachstellung auslöst, wenn entweder der Betrag einer der Korrelationssummen einen vorgegebenen Wert erreicht hat oder seit der vorausgegangenen Nachstellung eine vorgegebene Zeit verstrichen ist. Von Nachteil bei dieser bekannten Einrichtung ist der insgesamt relativ hohe schaltungstechnische Aufwand für die Durchführung der erwähnten Einstellung.

Der Erfindung liegt demgemäss die Aufgabe zugrunde, einen Weg zu zeigen, wie bei einer Schaltungsanordnung der eingangs genannten Art mit relativ geringem schaltungstechnischem Aufwand eine erhöhte Geschwindigkeit beim Abgleichen des Echokompensators erzielt werden kann.

Gelöst wird die vorstehend aufgezeigte Aufgabe bei einer Schaltungsanordnung der eingangs genannten Art erfindungsgemäss dadurch, dass das eingangs genannte Einstellsignal mit einem zusätzlichen Einstellsignal verknüpft ist, welches aus einem die Verstärkung des genannten Verstärkers angebenden Verstärkungseinstellsignal und aus einem die Grösse der Änderung des betreffenden Einstellsignals angebenden Änderungssignal gebildet ist, und dass der Echokompensator eine Schieberegisteranordnung umfasst, deren Registerinhalt von der Einstelleinrichtung her änderbar und lediglich entsprechend dem Registerbereich einer Mehrzahl von höherwertigen Registerstellen dem Empfangsleitungszweig als Kompensationssignal zugeführt ist.

Die Erfindung bringt den Vorteil mit sich, dass mit einem insgesamt relativ geringen schaltungstechnischen Aufwand ausgekommen werden kann, um eine relativ hohe Abgleichgeschwindigkeit beim Abgleichen des Echokompensators zu erzielen. Erreicht wird dies gerade dadurch, dass nicht nur der Absolutwert des die Verstärkung des erwähnten Verstärkers angebenden Einstellsignals herangezogen wird, sondern dass darüber hinaus auch die Grösse der Änderung dieses Einstellsignals, also die Dynamik des betreffenden Einstellsignals mitausgenutzt wird. Dadurch, dass von der vorhandenen Schieberegisteranordnung lediglich der Inhalt der höherwertigen Registerstellen für die Bildung des Kompensationssignals ausgenutzt wird, gelingt es im übrigen auf besonders einfache Weise, eine Abgleich-Einstellung des Echokompensators erst dann vorzunehmen, wenn das erwähnte Einstellsignal eine gewisse Grösse erreicht bzw. überschritten hat. Mit anderen Worten ausgedrückt heisst dies, dass es bei der Schaltungsanordnung gemäss der Erfindung auf besonders einfache Weise möglich ist, bei grossem Empfangspegel und entsprechend starker Änderung des dem Verstärker zuzuführenden Einstellsignals mit einer hohen Einstellgeschwindigkeit beim Einstellen des Echokompensators zu arbeiten, während bei kleinem Empfangspegel und damit verbundener bereits guter Kompensation bzw. gutem Abgleich des Echokompensators mit einer demgegenüber geringeren Einstellgeschwindigkeit bei dem betreffenden Abgleich gearbeitet werden kann.

Vorzugsweise ist die Schieberegisteranordnung ausgangsseitig mit der Eingangsseite eines Addierers verbunden, der ausgangsseitig mit der Eingangsseite der Schieberegisteranordnung verbunden ist, und der Addierer ist eingangsseitig ferner mit der Einstellanordnung verbunden. Hierdurch ergibt sich der Vorteil eines besonders geringen schaltungstechnischen Aufwands für die Realisierung der genannten Schieberegisteranordnung.

Zweckmässigerweise ist als ausgangsseitiger Teil der Einstellanordnung eine Verknüpfungseinrichtung vorgesehen, die das von der Einstellanordnung abgegebene eine Einstellsignal mit den die Verstärkung des Verstärkers und die Grösse der Änderung der betreffenden Verstärkung angebenden Signalen verknüpft. Hierdurch ergibt sich der Vorteil eines besonders geringen schaltungstechnischen Aufwands für die Ansteuerung der Schieberegisteranordnung.

Die zuvor erwähnte Verknüpfungseinrichtung ist vorzugsweise durch einen Multiplizierer gebildet. Dies bringt einen besonders geringen schaltungstechnischen Aufwand mit sich.

Anhand einer Zeichnung wird die Erfindung nachstehend beispielsweise näher erläutert.

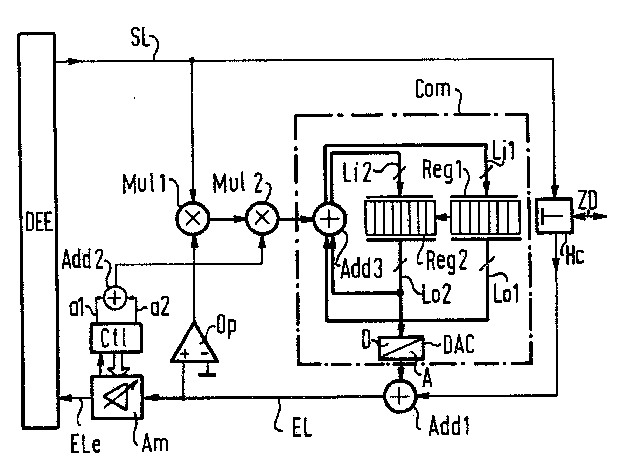

Die in der Zeichnung dargestellte Schaltungsanordnung weist einen Vierdrahtleitungsabschnitt mit einer zu einem Sendezweig gehörenden Sendeleitung SL und mit einer zu einem Empfangszweig gehörenden Empfangsleitung EL bzw. ELe auf. An der Sendeleitung SL und an der Empfangsleitung ELe ist ein Datenendgerät DEE angeschlossen, bei dem es sich um ein Gerät handeln mag, welches sowohl Datensignale abzugeben als auch Datensignale aufzunehmen vermag.

Der vorstehend erwähnte Vierdrahtleitungsabschnitt ist über eine Gabelschaltung Hc mit einem Zweidrahtleitungsabschnitt ZD verbunden, der für eine Vollduplex-Datensignalübertragung ausnutzbar ist.

Mit der Sendeleitung SL ist ferner der eine Eingang eines Multiplizierers Mul1 verbunden, welcher ausgangsseitig mit dem einen Eingang eines weiteren Multiplizierers Mul2 verbunden ist, der ausgangsseitig mit dem Eingang eines Echokompensationsnetzwerkes Com verbunden ist. Dieses Echokompensationsnetzwerk Com ist ausgangsseitig an einem Eingang eines Addierers Add1 angeschlossen, der mit einem weiteren Eingang an dem auf der Seite des Vierdrahtleitungsabschnitts befindlichen Ausgang der Gabelschaltung Hc angeschlossen ist.

In dem den Addierer Add1 enthaltenden Empfangszweig des Vierdrahtleitungsabschnitts ist ferner ein Verstärker Am eingefügt, der ein hinsichtlich seiner Verstärkung einstellbarer, und zwar insbesondere digital einstellbarer Verstärker sein mag. Der betreffende Verstärker Am ist dabei über die Empfangsleitung EL am Ausgang des Addierers Add1 angeschlossen, und mit seinem Ausgang ist er über die Empfangsleitung ELe mit einem Eingang des Datenendgeräts DEE verbunden. Die Verstärkung des Verstärkers Am wird von einer Steuerschaltung Ctl her eingestellt, welche eingangsseitig Steuerinformationen über die jeweilige Verstärkungseinstellung bzw. über die Änderung dieser Verstärkungseinstellung zugeführt erhält. Die betreffenden Steuersignale können von einem Ausgangspegel des Verstärkers Am gewonnen sein; sie können aus binären Einstellsignalen abgeleitet sein, mit deren Hilfe die Verstärkung des Verstärkers Am eingestellt wird.

An der Empfangsleitung EL ist ferner ein als Komparator dienender Operationsverstärker Op mit seinem nichtinvertierenden Eingang + angeschlossen. Der invertierende Eingang − des betreffenden Operationsverstärkers Op liegt an Masse. Mit seinem Ausgang ist der Operationsverstärker Op mit einem weiteren Eingang des bereits erwähnten Multiplizierers Mul1 verbunden.

Die erwähnte Steuerschaltung Ctl ist über zwei gesonderte Ausgänge a1, a2 mit den Eingängen eines Addierers Add2 verbunden. Über diese Ausgänge a1, a2 gibt die Steuerschaltung Ctl Signale ab, welche aus einem die Verstärkung des Verstärkers Am angebenden Einstellsignal bzw. aus einem die Grösse der Änderung dieses Einstellsignals angebenden Änderungssignal gebildet sind. Diese beiden Signale werden in dem Addierer Add2 zu einem zusätzlichen Einstellsignal summiert, welches über eine den Ausgang des Addierers Add2 mit einem weiteren Eingang des Multiplizierers Mul2 verbindenden Verbindung diesem Multiplizierer Mul2 zugeführt wird. Dem betreffenden Multiplizierer Mul1 wird als ein Einstellsignal das Ausgangssignal des Multiplizierers Mul1 zugeführt. Hierauf wird weiter unten noch kurz eingegangen werden.

Die die beiden zuvor betrachteten Multiplizierer Mul1 und Mul2 umfassende Einstellanordnung ist − wie oben bereits angedeutet − ausgangsseitig mit dem Eingang eines Echokompensationsnetzwerkes Com verbunden. Dieses Echokompensationsnetzwerk − kurz Echokompensator genannt − umfasst eingangsseitig einen Addierer Add3, dem eingangsseitig Einstellsignale vom Ausgang des Multiplizierers Mul2 zuführbar sind. Der betreffende Addierer Add3, der im Takte von ihn steuernden gesonderten Taktimpulsen Additionsvorgänge ausführen mag, ist ausgangsseitig mit den Eingängen einzelner Registerstufen zweier Schieberegister Reg1, Reg2 verbunden, und zwar über gesonderte Leitungen Li1 bzw. Li2, die jeweils eine der Anzahl der Registerstufen der betreffenden Schieberegister Reg1 bzw. Reg2 entsprechende Anzahl von Einzelleitungen aufweisen, was durch entsprechende Schrägstriche bei den genannten Leitungen angedeutet ist. Das Schieberegister Reg1 ist mit seinen Registerstufen dabei den Stellen niederer Wertigkeit des von dem Echokompensator Com zu bildenden Kompensationssignals zugehörig; die Anzahl der Registerstufen des Schieberegisters Reg1 und damit der Stellen niederer Wertigkeit des erwähnten Kompensationssignals kann beispielsweise 7 betragen. Das dem Schieberegister Reg1 hinsichtlich der Schieberichtung nachgeschaltete Schieberegister Reg2 ist mit seinen Registerstufen den Stellen höherer Wertigkeit des zu bildenden Kompensationssignals zugehörig; das Schieberegister Reg2 kann beispielsweise 10 Registerstufen aufweisen.

Die beiden Schieberegister Reg1, Reg2 sind ausgangsseitig über gesonderte Leitungen Lo1, Lo2 mit Eingängen des Addierers Add3 verbunden. Die erwähnten Leitungen Lo1, Lo2 weisen jeweils eine der Anzahl der Registerstufen des zugehörigen Schieberegisters Reg1 bzw. Reg2 entsprechende Anzahl von Einzelleitungen auf, was durch einen entsprechenden Schrägstrich bei der jeweiligen Leitung markiert ist.

Das zuvor betrachtete Schieberegister Reg2 ist ausgangsseitig an einem weiteren Eingang des oben bereits erwähnten Addierers Add1 angeschlossen. In die betreffende Verbindung ist ein Digital-Analog-Wandler DAC eingefügt, der lediglich die den höherwertigen Registerstellen der gesamten Schieberegisteranordnung entsprechenden Signale − also im vorliegenden Fall die Ausgangssignale des Schieberegisters Reg2 − aufnimmt und in ein dem Addierer Add1 zuzuführendes Kompensationssignal umsetzt.

Nachdem zuvor der Aufbau der in der Zeichnung dargestellten Schaltungsanordnung erläutert worden ist, sei nunmehr kurz auf die Arbeitsweise dieser Schaltungsanordnung eingegangen.

Zur Bildung des dem Addierer Add1 zuzuführenden Kompensationssignals muss der Echokompensator Com zunächst von der Einstellanordnung entsprechende Einstellsignale zugeführt erhalten. Das eine Einstellsignal liefert der Multiplizierer Mul1 von seinem Ausgang. Dieses Einstellsignal führt zu einem Nullabgleich der auf der Empfangsleitung EL auftretenden Echosignale, indem vom Ausgang des Multiplizierers Mul1 über den Multiplizierer Mul2 ein entsprechendes Einstellsignal in die Schieberegisteranordnung Reg1, Reg2 des Echokompensators Com abgegeben wird. Dabei kann zunächst davon ausgegangen werden, dass dem anderen Eingang des gerade erwähnten Multiplizierers Mul2 ein Signal zugeführt wird, welches keine Veränderung des vom Ausgang des Multiplizierers Mul1 abgegebenen Einstellsignals bewirkt. Der Multiplizierer Mul2 nimmt somit annahmegemäss eine Multiplikation mit dem Faktor 1 bezüglich des vom Ausgang des Multiplizierers Mul1 abgegebenen Einstellsignal vor. Dieses Einstellsignal wird hier als einzelnes Bit der Eingangsseite des Addierers Add3 zugeführt und gelangt damit in die niederwertigste Registerstufe des Schieberegisters Reg1 hinein. Durch den über den Addierer Add3 erfolgenden Additionsumlauf wird anschliessend der Inhalt des Schieberegisters Reg1 weiter erhöht, und zwar solange, wie vom Ausgang des Multiplizierers Mul1 noch ein Einstellsignal zur Verfügung steht. Dieser Vorgang wiederholt sich solange, bis dem Schieberegister Reg2 vom Ausgang des Schieberegisters Reg1 her entsprechende Signale zugeführt werden. Dies ist dann der Fall, wenn in dem Schieberegister Reg1 gewissermassen ein Überlauf stattfindet, der dann von dem Schieberegister Reg2 aufgenommen wird. Die in dem Schieberegister Reg2 befindlichen Signale werden zur Ansteuerung des Addierers Add1, also als Kompensationssignale ausgenutzt, mit deren Hilfe die auf der Empfangsleitung EL auftretenden Signale von Echosignalanteilen befreit werden. Die betreffenden Echosignalanteile haben ihre Ursache darin, dass über die Sendeleitung SL übertragene Signale nicht nur über die Zweidrahtleitung ZD übertragen werden, sondern auch über die Gabelschaltung Hc zu dem in der Empfangsleitung EL liegenden Addierer Add1 hin gelangen.

Im vorliegenden Fall werden nicht nur die von dem Ausgang des Multiplizierers Mul1 abgegebenen Einstellsignale zur Einstellung des Echokompensators Com herangezogen, sondern es wird darüber hinaus ein zusätzliches Einstellsignal berücksichtigt, welches dem mit dem Ausgang des Addierers Add2 verbundenen Eingang des Multiplizierers Mul2 zugeführt wird. Dieses zusätzliche Einstellsignal umfasst zum einen ein die Verstärkung des Verstärkers Am angebendes Verstärkungseinstellsignal, und zum anderen berücksichtigt das betreffende zusätzliche Einstellsignal ein die Grösse der Änderung dieses Verstärkungseinstellsignals angebendes Änderungssignal. Je grösser das Verstärkungseinstellsignal und/oder das Änderungssignal ist, umso grösser ist das vom Ausgang des Addierers Add2 abgegebene zusätzliche Einstellsignal, welches eine entsprechend starke Auswirkung auf die Einstellung des Echokompensators Com hat. Dies bedeutet, dass vor einer Datenübertragung die erforderlichen Einstellgrössen für die Einstellung des Verstärkers Am zur schnellen Abgleicheinstellung des Echokompensators Com mitausgenutzt werden. In diesem Falle werden nämlich relativ schnell dem Schieberegister Reg2 Signale zugeführt, die als Kompensationssignale dann dem Addierer Add1 zugeführt werden. Wenn indessen die Verstärkung des Verstärkers Am einen niedrigen (normalen) Wert erreicht hat und/oder die Grösse der Änderung der betreffenden Verstärkungseinstellung gering geworden ist, läuft die Abgleicheinstellung des Echokompensators Com wieder mit geringerer Geschwindigkeit ab. In diesem Falle werden nämlich die von der die beiden Multiplizierer Mul1, Mul2 umfassenden Einstellanordnung abgegebenen Einstellsignale erst nach einer Mehrzahl von Registerumläufen in dem Schieberegister Reg2 zur Verfügung stehen und damit dann erst als Kompensationssignale verfügbar sein.

Im Zusammenhang mit der vorstehenden Erläuterung der Arbeitsweise der in der Zeichnung dargestellten Schaltungsanordnung ist da von ausgegangen worden, dass die vom Ausgang des Multiplizierers Mul1 abgegebenen Einstellsignale jeweils als einzelne Bits abgegeben werden. Der Multiplizierer Mul2 kann dabei so ausgebildet sein, dass er die Anzahl dieser vom Ausgang des Multiplizierers Mul1 abgegebenen Bits entsprechend dem zusätzlichen Einstellsignal mehrfach abgibt, welches vom Ausgang des Addierers Add2 abgegeben wird. Es ist aber auch möglich, dass die beiden Multiplizierer Mul1, Mul2 Analogsignale verarbeitende und abgebende Multiplizierer sind. In diesem Falle wäre zwischen dem Ausgang des Multiplizierers Mul2 und dem Eingang des Addierers Add3 ein Analog-Digital-Wandler vorzusehen. Dabei wäre gegebenenfalls zwischen dem Ausgang des Addierers Add2 und dem einen Eingang des Multiplizierers Mul2 ein Digital-Analog-Wandler vorzusehen, und zwar für den Fall, dass den Eingängen des Addierers Add2 vom Ausgang der Steuerschaltung Ctl digitale Signale zugeführt werden.

**Patentansprüche**

1. Schaltungsanordnung zum Abgleichen eines Echokompensators (Com), der ausgangsseitig mit einer Empfangsleitung (EL) eines diese und eine Sendeleitung (SL) umfassenden Vierdrahtleitungsabschnitts verbunden ist, welcher über eine Gabelschaltung (Hc) mit einem Zweidrahtleitungsabschnitt (ZD) verbunden ist, mit einer Einstellanordnung (Mul1, Mul2), welche eingangsseitig mit der Sendeleitung (SL) und mit der Empfangsleitung (EL) verbunden ist und welche aus den ihr eingangsseitig zugeführten Signalen jeweils ein Einstellsignal zur Einstellung des Echokompensators (Com) bildet, und mit einem in der Empfangsleitung (EL) liegenden, in seiner Verstärkung einstellbaren Verstärker (Am), dadurch gekennzeichnet, dass das genannte Einstellsignal mit einem zusätzlichen Einstellsignal verknüpft ist, welches aus einem die Verstärkung des Verstärkers (Am) angebenden Verstärkungseinstellsignal und aus einem die Grösse des betreffenden Verstärkungseinstellsignals angebenden Änderungssignal gebildet ist,

und dass der Echokompensator (Com) eine Schieberegisteranordnung (Reg1, Reg2) umfasst, deren Registerinhalt von der Einstellanordnung (Mul1, Mul2) her änderbar und lediglich entsprechend dem Registerbereich (Reg2) einer Mehrzahl von höherwertigen Registerstellen der Empfangsleitung (EL) als Kompensationssignal zugeführt ist.

2. Schaltungsanordnung nach Anspruch 1, dadurch gekennzeichnet, dass die Schieberegisteranordnung (Reg1, Reg2) ausgangsseitig mit der Eingangsseite eines Addierers (Add3) verbunden ist, der ausgangsseitig mit der Eingangsseite der Schieberegisteranordnung (Reg1, Reg2) verbunden ist, und dass der Addierer (Add3) eingangsseitig ferner mit der Einstellanordnung (Mul1, Mul2) verbunden ist.

3. Schaltungsanordnung nach Anspruch 2, dadurch gekennzeichnet, dass als ausgangsseitiger Teil der Einstellanordnung (Mul1, Mul2) eine Verknüpfungseinrichtung (Mul2) vorhanden ist, die das von der Einstellanordnung abgegebene eine Einstellsignal mit den die Verstärkung des Verstärkers (Am) und die Grösse der Änderung der betreffenden Verstärkung angebenden Signalen verknüpft.

4. Schaltungsanordnung nach Anspruch 3, dadurch gekennzeichnet, dass die Verknüpfungseinrichtung (Mul2) durch einen Multiplizierer gebildet ist.

## Revendications

1. Montage pour le réglage d'un compensateur d'écho (Com) qui est relié côté sortie avec la ligne de réception d'une section de commutation à quatre fils qui comprend ladite ligne de réception et une ligne d'émission (SL) et qui est reliée par l'intermédiaire d'un termineur (He) à une section de ligne bifilaire (ZD), avec un dispositif de réglage (Mul1, Mul2) qui est relié, côté entrée, à la ligne d'émission (SL) et à la ligne de réception (EL), et qui forme à partir des signaux qui lui sont appliqués respectivement un signal de réglage pour régler le compensateur d'échos (Com), et avec un amplificateur à facteur d'amplification réglable (Am), situé dans la ligne de réception (EL), caractérisé par le fait que ledit signal de réglage est combiné avec un signal de réglage supplémentaire qui est formé à partir d'un signal de réglage supplémentaire qui est formé à partir d'un signal de réglage du gain donnant le gain de l'amplificateur (Am) et d'un signal de modification donnant l'importance du signal de réglage du gain concerné, et que le compensateur d'échos (Com) comporte un dispositif à registres à décalage (Reg1, Reg2), dont le contenu est susceptible d'être modifié par le dispositif de réglage (Mul1, Mul2) et est appliqué uniquement en fonction de la zone de registre (Reg2) de plusieurs emplacements de registre de poids plus élevés de la ligne de réception (EL), en tant que signal de compensation.

2. Montage selon la revendication 1, caractérisé par le fait que le dispositif à registres à décalage (Reg1, Reg2) est relié, côté sortie, au côté entrée d'un dispositif d'adressage (Add3) qui, côté sortie, est relié au côté entrée du dispositif à registre à décalage (Reg1, Reg2) et que le dispositif d'adressage (Add3) est, en outre, côté entrée, relié au dispositif de réglage (Mul1, Mul2).

3. Montage selon la revendication 2, caractérisé par le fait que la partie sortie du dispositif de réglage (Mul1, Mul2) est constituée par un dispositif combinatoire logique (Mul2) qui procède à la combinaison du signal de réglage fournie par le dispositif de réglage avec les signaux fournis par le gain de l'amplificateur (Am) et la grandeur de la modification du gain en cause.

4. Montage selon la revendication 3, caractérisé par le fait que le dispositif combination (Mul2) est constitué par un multiplicateur.

## Claims

1. A circuit arrangement for adjusting an echo compensator (Com) which is connected at its output to a receiving line (EL) of a four-wire line section which comprises said receiving line and a transmitting line (SL) and which is connected via a hybrid circuit (Hc) to a two-wire line section (ZD); with a setting arrangement (Mul1, Mul2) which is connected at its input to the transmitting line (SL) and to the receiving line (EL), and which forms a setting signal for the setting of the echo compensator (Com) from each of the signals supplied at its input; and with an amplifier (Am) which is located in the receiving line (EL) and which is adjustable in respect of its amplification, characterised in that the aforementioned setting signal is logic-linked to an additional setting signal which is formed by an amplification setting signal, which indicates the amplification of the amplifier (Am), and by a change signal which indicates the magnitude of the change in the respective amplification setting signal; and that the echo compensator (Com) includes a shift register arrangement (Reg1, Reg2) whose content can be changed by the setting arrangement (Mul1, Mul2) and, only by reference to the register section (Reg2) of a plurality of higher-value register positions, form a compensation signal to be supplied to the receiving line (EL).

2. A circuit arrangement as claimed in Claim 1, characterised in that the shift register arrangement (Reg1, Reg2) is connected at its output to the input end of an adder (Add3) which is connected at its output to the input end of the shift register arrangement (Reg1, Reg2), and that the adder (Add3) is also connected at its input to the setting arrangement (Mul1, Mul2).

3. A circuit arrangement as claimed in Claim 2, characterised in that the output-end part of the setting arrangement (Mul1, Mul2) consists of a logic-linking device (Mul2) which logic-links the first setting signal, emitted from the setting arrangement, with the signals which indicate the amplification of the amplifier (Am) and the magnitude of the change in the respective amplification.

4. A circuit arrangement as claimed in Claim 3, characterised in that the logic-linking device (Mul2) is formed by a multiplier.